# EUROPÄISCHE PATENTSCHRIFT

(11) **EP 4 141 177 B1**
(45) Veröffentlichungstag und Bekanntmachung des Hinweises auf die Patenterteilung: **05.11.2025**
(21) Anmeldenummer: 22178583.5
(22) Anmeldetag: 13.06.2022
(51) Int. Cl.: E02F 9/20, G05G 9/047

(54) **BEDIENELEMENT UND HERSTELLUNGSVERFAHREN FÜR EIN BEDIENELEMENT**
CONTROL ELEMENT AND METHOD FOR MANUFACTURING A CONTROL ELEMENT
ÉLÉMENT DE COMMANDE ET PROCÉDÉ DE FABRICATION D'UN ÉLÉMENT DE COMMANDE

(30) Priorität: 27.08.2021 DE 102021122292
(43) Veröffentlichungstag der Anmeldung: 01.03.2023
(73) Patentinhaber: elobau GmbH & Co. KG, 88299 Leutkirch im Allgäu (DE)
(72) Erfinder: Morent, Florian, 88299 Leutkirch (DE); Walter, Martin, 88410 Bad Wurzach (DE)
(74) Vertreter: VKK Patentanwälte PartG mbB

(56) Entgegenhaltungen:
- EP-A1- 0 536 174
- EP-A2- 0 032 883
- EP-A2- 2 078 999
- JP-A- 2002 251 221
- US-A1- 2017 090 506

## Beschreibung

Die vorliegende Erfindung betrifft ein Bedienelement zum Steuern einer Maschine, wie bspw. einer Industrieanlage oder einem Fahrzeug, insbesondere einem Bagger, ein Herstellungsverfahren zur Herstellung des vorgestellten Bedienelements und eine Maschine, wie bspw. einen Bagger, die das vorgestellte Bedienelement umfasst.

Zur Maschinensteuerung eingesetzte Bedienelemente in Form von Steuerhebeln weisen üblicherweise ein Gehäuse auf, in dem ein um einen Drehpunkt oder zwei kardanische Achsen relativ zum Gehäuse beweglicher, insbesondere schwenkbar gelagerter Steuerhebel und ein zwischen dem Gehäuse und dem Steuerhebel wirkender Mechanismus angeordnet sind. Der Mechanismus beeinflusst jeweilige zum Schwenken des Steuerhebels von einer Ruhestellung bzw. Ausgangsstellung in eine ausgelenkte Stellung erforderliche Betätigungsdrehmomente und stellt in der Regel ein Rückstelldrehmoment zum Rückstellen des Steuerhebels von einer ausgelenkten Stellung in die Ruhestellung bzw. Ausgangsstellung bereit.

Bedienelemente zur Maschinensteuerung sollen kompakt und ergonomisch sein. Insbesondere sollen Bedienelemente zu Maschinensteuerung für einen Einsatz in industrieller Umgebung, wie bspw. auf Baustellen, besonders robust sein, um eine hohe Lebensdauer bzw. eine hohe Standzeit zu ermöglichen.

Aus der EP 0 032 883 A2 ist ein mechanisch arbeitender Bedienhebel bekannt, der mittels zweier Seilzüge mit einer vom Bedienhebel entfernten Aufnahme verbunden ist, wobei die Aufnahme seitlich versetzt zum Bedienhebel angeordent ist.

Aus der WO 91/19046 A1 ist ein Bedienhebel bekannt, bei dem eine Steuerleitung von einem Micro-Switch zu einem elektrischen Kontrollmodul verläuft und eine zweite Steuerleitung von einem anderen Micro-Switch für Bedienknöpfe zu dem Kontrollmodul verläuft.

Aus der US 2017/090506 A1 ist ein Bedienhebel mit einem einzigen Kabelbaum bekannt, der helixartig um die Mittelachse des Bedienhebels geführt ist.

Die vorgestellte Erfindung dient insbesondere dazu, ein Bedienelement bereitzustellen, das eine intuitive und exakte Bedienung einer Maschine ermöglicht und Ermüdungen bzw. Überbeanspruchungen eines Bedieners einer Maschine minimiert.

Es wird somit gemäß einem ersten Aspekt der vorliegenden Erfindung ein Bedienelement zum Bedienen einer Maschine durch einen Bediener vorgestellt. Das Bedienelement umfasst einen um einen Drehpunkt schwenkbar gelagerten Bedienhebel, eine Vielzahl Steuerleitungen zum Verbinden des Bedienhebels mit einer Steuerungseinheit und eine Aufnahme zum Aufnehmen der Steuerleitungen. Jeweilige Steuerleitungen der Vielzahl Steuerleitungen verlaufen in mindestens einer paarigen Anordnung aus einem ersten Leitungsbaum und einem zweiten Leitungsbaum an dem Bedienhebel entlang zu der Aufnahme, wobei der erste Leitungbaum von einem ersten Ausgangspunkt aus zu der Aufnahme verläuft und der zweite Leitungsbaum von einem zweiten Ausgangspunkt aus zu der Aufnahme verläuft.

Der erste Ausgangspunkt und der zweite Ausgangspunkt sind beabstandet zu der Aufnahme angeordnet. Der erste Leitungsbaum ist an einem ersten Verbindungspunkt mit der Aufnahme verbunden und der zweite Leitungsbaum ist an einem zweiten Verbindungspunkt mit der Aufnahme verbunden. Der erste Verbindungspunkt und der zweite Verbindungspunkt sind voneinander beabstandet auf einer geraden Verbindungslinie angeordnet, wobei die Verbindungslinie durch eine Mittelachse des Bedienhebels verläuft.

Die Erfindung versteht unter einem Bedienelement ein Element zum Bedienen bzw. Kontrollieren einer Maschine. Insbesondere dient ein Bedienelement zum Eingeben von Steuerungsbefehlen in eine Maschine. Dazu kann das Bedienelement bspw. als sogenannter "Joystick" ausgestaltet sein. Zum Übermitteln der Steuerungsbefehle an die Maschine umfasst das vorgestellte Bedienelement Steuerleitungen, die direkt oder über ein Kopplungselement, wie bspw. ein Ventil, eine Recheneinheit oder eine Schnittstelle, mit der Maschine verbunden sein können.

Unter einem Leitungsbaum wird im Kontext der vorgestellten Erfindung eine Anzahl, insbesondere eine Vielzahl an Steuerleitungen verstanden, die von einer gemeinsamen Hülle umgeben ist bzw. sind. Bspw. kann ein Leitungsbaum eine Vielzahl elektrischer Leitungen bzw. Kabel umfassen, die auch von einer Kunststoffhülse umgeben sein können Aber auch ein Flachbandkabel wird erfindungsgemäß als Leitungsbaum verstanden, ebenso wie hydraulische oder pneumatische Leitungen.

Unter einer Mittelachse eines Bedienhebels ist im Kontext der vorgestellten Erfindung eine Achse zu verstehen, die vertikal, d.h. insbesondere von einem in Schwerkraftrichtung oberen Ende zu einem in Schwerkraftrichtung unteren Ende des Bedienhebels durch diesen verläuft. Dabei verläuft die Mittelachse, je nach Form des Bedienhebels, mittig, d.h. insbesondere durch einen Mittelpunkt eines zylindrischen Teils des Bedienhebels, durch den Bedienhebel. An dem Bedienhebel kann eine Benutzerschnittstelle auch in Form eines Griffbereiches angeordnet sein, wobei die Benutzerschnittstelle zusätzlich zum Griffbereich, u.a. auch in diesem, Bedienelemente aufweisen kann, die bspw. als Taster, Schalter oder Bedienfelder zum Eingeben von Steuerungsbefehlen ausgebildet sind. Entsprechend kann der Bedienhebel mittels der Benutzerschnittstelle - dem Griffbereich - bewegt werden, wobei auch die Bedienelementen mitbewegt werden. Die Benutzerschnittstelle kann aus Kunststoff bestehen und eine ergonomische Form aufweisen.

Der Bedienhebel ist vorzugsweise in zwei Achsen bzw. zweidimensional um den Drehpunkt des vorgestellten Bedienelements schwenkbar. Die Mittelachse kann eine virtuelle Hilfsachse oder eine physische, bspw. aus Metall oder Kunststoff hergestellte Achse sein.

Die Erfindung versteht unter einer Aufnahme ein fest positioniertes bzw. fest positionierbares Element, wie bspw. einen Rahmen, an dem die erfindungsgemäß vorgesehenen Steuerleitungen anzuordnen und entsprechend positionsfest zu sichern sind. Entsprechend ist der Bedienhebel relativ zu der Aufnahme bewegbar.

Zum Anordnen bzw. Aufnehmen der Steuerleitungen sind an dem vorgestellten Bedienelement Verbindungspunkte vorgesehen. Ein Verbindungspunkt kann eine oder mehrere mechanische Schnittstellen, wie bspw. Klemmelemente umfassen, an denen jeweilige Steuerleitungen bzw. Leitungsbäume direkt oder mittels einer Gegenschnittstelle, wie bspw. einem Gegenklemmelement, angeordnet werden können.

Insbesondere kann eine mechanische Schnittstelle zum Anordnen bzw. Aufnehmen der erfindungsgemäß vorgesehenen Steuerleitungen ein mechanisches Federelement umfassen, das sich beim Anordnen der Steuerleitungen an der mechanischen Schnittstelle reversibel bzw. elastisch verformt und eine Klemmkraft zum positionsfesten Sichern der Steuerleitungen an der Aufnahme bereitstellt.

Das erfindungsgemäße Bedienelement basiert auf dem Prinzip, dass die Steuerleitungen des Bedienelements in paarige Leitungsbäume aufgeteilt sind. Entsprechend laufen mindestens zwei Leitungsbäume von jeweiligen Ausgangspunkten an dem erfindungsgemäß vorgesehenen Bedienhebel zu jeweiligen Verbindungspunkten an der erfindungsgemäß vorgesehenen Aufnahme.

Da Steuerleitungen, insbesondere die zu Leitungsbäumen zusammengefassten Steuerleitungen, bei einer Bewegung einen mechanischen Widerstand bereitstellen, wirken durch die Steuerleitungen mechanische Widerstände bzw. Drehmomente dieser Bewegung entgegen. Um eine gleichmäßige Verteilung der durch die Steuerleitungen auf den Bedienhebel wirkenden Drehmomente bzw. Kräfte zu erreichen, sind die Steuerleitungen in paarige Leitungsbäume aufgeteilt, die erfindungsgemäß derart an jeweiligen Verbindungspunkten mit der Aufnahme des Bedienelements verbunden sind, dass der erste Verbindungspunkt und der zweite Verbindungspunkt voneinander beabstandet auf einer geraden Verbindungslinie liegen, wobei die Verbindungslinie durch eine Mittelachse des Bedienhebels verläuft. Insbesondere liegen der erste Verbindungspunkt und der zweite Verbindungspunkt auf gegenüberliegenden Seiten der Mittelachse. Dabei kann diese Verbindungslinie über, unter oder durch den Drehpunkt verlaufen.

Durch die beabstandete Anordnung der Verbindungspunkte, d.h. des ersten Verbindungspunkts und des zweiten Verbindungspunkts auf der Verbindungslinie werden die durch die beiden Leitungsbäume auf den Bedienhebel wirkende Drehmomente bzw. Kräfte aufgeteilt und insbesondere gleichmäßig verteilt. Entsprechend gleichen die jeweiligen Drehmomente bzw. Kräfte der jeweiligen Leitungsbäume einander aus, bzw. kompensieren einander, so dass bei einer Bewegung des Bedienhebels eine einseitige Beaufschlagung des Bedienhebels mit Drehmoment und ein dadurch bedingtes Ablenken von einer vorgegebenen bzw. durch einen Nutzer erwarteten Trajektorie bzw. unterschiedliche Offsets der Achsen vermieden werden.

Entsprechend wird der Bedienhebel gleichbleibend oder nur minimal mit einem einseitig wirkenden Drehmoment beaufschlagt, so dass eine Bewegung des Bedienhebels für einen Nutzer sehr intuitiv bzw. vorhersagbar ist.

Insbesondere bewirkt die erfindungsgemäß vorgesehene beabstandete Anordnung der Verbindungspunkte auf der Verbindungsachse, dass einer von dem ersten Leitungsbaum auf den Bedienhebel wirkenden Zugkraft eine von dem zweiten Leitungsbaum auf den Bedienhebel wirkende Zugkraft entgegengesetzt wird, so dass sich die Zugkräfte ausgleichen und der Bedienhebel besonders präzise bewegt werden kann. Gleiches gilt analog für sich aufhebende Druckkräfte, sofern diese auftreten.

Aufgrund der einander ausgleichenden Wirkung von durch die paarigen Leitungsbäume wirkenden Drehmomenten kann eine besonders große Anzahl an Steuerleitungen in dem Bedienelement angeordnet werden, so dass auch komplexe Schaltungen bzw. Steuerungsanordnungen umsetzbar sind, ohne dass sich eine Bedienhaptik bzw. eine Präzision des Bedienelements gegenüber einfachen Schaltungen bzw. Steuerungsanordnungen verschlechterte.

Insbesondere bedingt die Aufteilung der Steuerleitungen in paarige Leitungsbäume einen gegenüber einer Anordnung mit einem einzelnen Leitungsbaum geringeren Querschnitt der jeweiligen Leitungsbäume, so dass die jeweiligen Leitungsbäume einen kleineren minimalen Biegeradius aufweisen können als ein einzelner Leitungsbaum, bei gleicher Anzahl von zur Verfügung stehenden Signalen bzw. Funktionen.

Weiterhin ermöglicht die Aufteilung der Steuerleitungen des vorgestellten Bedienelements in paarige Leitungsbäume einen Betrieb des vorgestellten Bedienelements mit gegenüber einer Anordnung mit einem einzelnen Leitungsbaum geringeren Drehmomenttoleranzen bzw. einer präziseren Steuerungseinstellung.

Ferner werden durch die Aufteilung der Steuerleitungen des vorgestellten Bedienelements in paarige Leitungsbäume Materialermüdungen, wie bspw. Litzenbrüche, gegenüber einer Anordnung mit einem einzelnen Leitungsbaum minimiert und entsprechend eine Lebensdauer bzw. Standzeit des vorgestellten Bedienelements maximiert.

Erfindungsgemäß ist weiter vorgesehen, dass der erste Leitungsbaum und der zweite Leitungsbaum wendelförmig um die Mittelachse des Bedienhebels verlaufen, wobei sich der erste Leitungsbaum und der zweite Leitungsbaum erfindungsgemäß entweder in ihrem jeweiligen Drehsinn unterscheiden oder denselben Drehsinn aufweisen, was bevorzugt ist. Ein wendelförmiger bzw. schraubenförmiger Verlauf des ersten Leitungsbaums und des zweiten Leitungsbaums um die Mittelachse des Bedienhebels, bei dem sich der erste Leitungsbaum und der zweite Leitungsbaum in ihrem Drehsinn unterscheiden bzw. in unterschiedlichen Drehrichtungen verlaufen, bedingt einen korrespondierenden Drehmomentverlauf jeweiliger durch den ersten Leitungsbaum und den zweiten Leitungsbaum bei einer Bewegung des Bedienhebels auf den Bedienhebel wirkender Drehmomente. Insbesondere bilden der erste Leitungsbaum und der zweite Leitungsbaum zwei zylindrische Spiralen bzw. Helices, die sich gegenseitig ausgleichen. Dazu können die Spiralen bzw. Helices insbesondere um 180° gespiegelt sein, und entsprechend stabilisierend auf den Bedienhebel wirken. Insbesondere verlaufen der erste und der zweite Leitungsbaum wendelförmig und symmetrisch zueinander um die Mittelachse des Bedienhebels, die so eine Symmetrieachse bildet. Der wendelförmige Verlauf der beiden Leitungsbäume um die Mittelachse des Bedienhebels führt dazu, dass ihre Länge größer ist als die entsprechende axiale Länge des Bedienhebels, der so besonders beweglich ist, da die Kabelbäume seinen Bewegungen problemlos folgen können. So sind auch Materialermüdungen aufgrund von Reibungskontakt zwischen einem Leitungsbaum und einem den Bedienhebel umgebenen Faltenbalg vermieden und die Lebensdauer der Vorrichtung verlängert. Mit gleichem Drehsinn verlaufende Leitungsbäume sind ebenfalls erfindungsgemäß und bevorzugt, da sie beispielsweise einfacher montierbar sind und sich räumlich weniger stark beeinflussen.

In Ausgestaltung der vorgestellten Erfindung ist vorgesehen, dass die Mittelachse zwischen einem oberen Ende und einem unteren Ende des Bedienhebels und durch den Drehpunkt verläuft. Je nach Form des Bedienhebels können Ausrichtung und Lage der Mittelachse variieren, wobei die Mittelachse, insbesondere in einer Ruhestellung bzw. Ausgangsstellung des Bedienhebels, im Wesentlichen senkrecht durch den Bedienhebel verläuft und den Drehpunkt insbesondere mit dem oberen Ende des Bedienhebels verbindet.

In Ausgestaltung der vorgestellten Erfindung ist vorgesehen, dass die Verbindungslinie durch den Drehpunkt verläuft.

Eine durch den Drehpunkt des vorgestellten Bedienelements verlaufende Mittelachse bedingt, dass der erste Verbindungspunkt und der zweite Verbindungspunkt in Z-Richtung auf Höhe des Drehpunkts liegen, so dass der Drehpunkt besonders kraftneutral ist bzw. mit besonders wenig ablenkendem Drehmoment beaufschlagt wird, da die am Verbindungspunkt angreifenden Kräfte so keinen Abstand in Z-Richtung zu dem Drehpunkt haben. Erfindungsgemäß ist jedoch auch eine Anordnung der beiden Verbindungspunkte in Z-Richtung oberhalb oder unterhalb des Drehpunktes, vorzugsweise jedoch wiederum auf demselben Z-Wert.

In Ausgestaltung der vorgestellten Erfindung ist vorgesehen, dass die Steuerleitungen elektrische Leitungen, pneumatische Leitungen und/oder hydraulische Leitungen umfassen. Je nach Art einer zu steuernden Maschine kann das vorgestellte Bedienelement verschiedene Arten Steuerleitungen umfassen. Insbesondere pneumatische oder hydraulische Steuerleitungen, die eine dickere Wandung als elektrische Leitungen aufweisen und die bspw. mit einem Wegeventil verbunden sind, zeigen im Betrieb einen erheblichen mechanischen Widerstand, so dass sich das vorgestellte Bedienelement besonders vorteilhaft bei direkter pneumatischer oder hydraulischer Anbindung eignet.

In Ausgestaltung der vorgestellten Erfindung ist vorgesehen, dass der erste Ausgangspunkt und der zweite Ausgangspunkt beabstandet auf einer den ersten Ausgangspunkt und den zweiten Ausgangspunkt verbindenden Ausgangspunktlinie angeordnet sind, wobei die Ausgangspunktlinie durch die Mittelachse des Bedienhebels verläuft. Insbesondere liegen der erste Ausgangspunkt und der zweite Ausgangspunk derart voneinander beabstandet auf der Ausgangspunktlinie, dass diese auf gegenüberliegenden Seiten der Mittelachse angeordnet sind. Der erste Ausgangspunkt und der zweite Ausgangspukt sind bspw. Punkte, an denen jeweilige Steuerleitungen aus einer mit dem Bedienhebel des vorgestellten Bedienelements verbundenen Benutzerschnittstelle heraustreten. Alternativ können der erste Ausgangspunkt und der zweite Ausgangspukt innerhalb der Benutzerschnittstelle liegen. Erster und zweiter Leitungsbaum können an dem ersten bzw. zweiten Ausgangspunkt mit einem jeweils gleichen Ausgangswinkel in eine bspw. wendelförmige Anordnung übergehen. Alternativ können der erste Leitungsbaum und der zweite Leitungsbaum in unterschiedlichen Ausgangswinkeln in eine wendelförmige Anordnung übergehen, so dass bspw. ein entgegengesetzter Drehsinn des ersten Leitungsbaums zu dem zweiten Leitungsbaum erzwungen wird. Dazu kann an dem ersten Ausgangspunkt bspw. eine erste Führung angeordnet sein, die den ersten Leitungsbaum in einem ersten Drehsinn zu dem ersten Verbindungspunkt führt und an dem zweiten Ausgangspunkt eine zweite Führung angeordnet sein, die den zweiten Leitungsbaum in einem dem ersten Drehsinn entgegengesetzten zweiten Drehsinn zu dem zweiten Verbindungspunkt führt.

In Ausgestaltung der Erfindung ist vorgesehen, dass ein durch den ersten Leitungsbaum auf den Bedienhebel wirkendes Drehmoment einem durch den zweiten Leitungsbaum auf den Bedienhebel wirkenden Drehmoment entspricht, so dass sich jeweilige durch die Steuerleitungen auf den Bedienhebel wirkende Drehmomente kompensieren. Die damit verbundenen Vorteile wurden bereits beschrieben. Insbesondere bei einer unterschiedlichen Zusammensetzung von erstem und zweitem Leitungsbaum ist ein Verlauf des ersten und/oder des zweiten Leitungsbaums erfindungsgemäß so geändert, dass sich die Drehmomentdifferenzen ausgleichen. Dazu kann insbesondere der erste Leitungsbaum auf der Verbindungsachse näher an der Mittelachse angeordnet sein als der zweite Leitungsbaum.

In Ausgestaltung der vorgestellten Erfindung ist vorgesehen, dass der erste Leitungsbaum eine Vielzahl von elektrischen Steuerleitungen umfasst, die zusammen vorzugsweise mit einer einzigen gemeinsamen Hülle ummantelt sind, und der zweite Leitungsbaum eine Vielzahl von elektrischen Steuerleitungen umfasst, die vorzugsweise zusammen mit einer einzigen gemeinsamen Hülle ummantelt sind. Durch mehrere, insbesondere zwei separate Leitungsbäume, die jeweils eine Anzahl Steuerleitungen umfassen und diese mittels einer jeweiligen Hülle vor Umgebungseinflüssen schützen, kann eine auf den Bedienhebel des vorgestellten Bedienelements wirkende mechanische Belastung gegenüber einem einzelnen Leitungsbaum reduziert werden, da mehrere Leitungsbäume mit geringem Querschnitt bei einer Bewegung des Bedienhebels deutlich weniger mechanischen Widerstand bzw. Gegenkraft bereitstellen als ein einzelner Leitungsbaum, der einen entsprechend großen Querschnitt aufweist. Erfindungsgemäß sind jedoch auch einzelne Litzen eines Leitungsbaums, die zusammen einen Leitungsbaum bilden und nicht unbedingt in einer gemeinsamen Hülle angeordnet sein müssen, sondern stattdessen entweder gar nicht gebündelt sind oder nur ein- oder mehrmals über kurze axiale Abschnitte. Auch ein Flachband wäre erfindungsgemäß. Hinsichtlich der hydraulischen oder pneumatischen Steuerleitungen bilden diese dann einen Leitungsbaum im Sinne der Erfindung, auch wenn dieser nur eine einzige Steuerleitung aufweist.

In Ausgestaltung der vorgestellten Erfindung ist vorgesehen, dass der erste Leitungsbaum länger ist als eine erste Gerade zwischen dem ersten Ausgangspunkt und dem ersten Verbindungspunkt, und der zweite Leitungsbaum länger ist als eine zweite Gerade zwischen dem zweiten Ausgangspunkt und dem zweiten Verbindungspunkt. Hierdurch wird eine Leitungsreserve für eine Bewegung des Bedienhebels bereitgestellt, so dass der Bedienhebel sich in insbesondere zwei Achsen bewegen kann, ohne dass sich ein der Bewegung des Bedienhebels durch die Leitungsbäume entgegengebrachter mechanischer Widerstand erhöht.

In einem zweiten Aspekt betrifft die vorgestellte Erfindung ein Herstellungsverfahren zur Herstellung eines Bedienelements. Das Herstellungsverfahren umfasst einen Bereitstellungsschritt, bei dem ein um einen Drehpunkt schwenkbar gelagerter Bedienhebel, eine Vielzahl Steuerleitungen zum Verbinden des Bedienhebels mit einer Steuerungseinheit und eine Aufnahme zum Aufnehmen der Steuerleitungen bereitgestellt werden. Weiterhin umfasst das Herstellungsverfahren einen Verbindungsschritt, bei dem jeweilige Steuerleitungen der Vielzahl Steuerleitungen in mindestens einer paarigen Anordnung aus einem ersten Leitungsbaum und einem zweiten Leitungsbaum in Richtung der Aufnahme verlegt werden, wobei der erste Leitungsbaum von einem ersten Ausgangspunkt aus in Richtung der Aufnahme verlegt wird und der zweite Leitungsbaum von einem zweiten Ausgangspunkt aus in Richtung der Aufnahme verlegt wird. Der erste Leitungsbaum wird an einem ersten Verbindungspunkt mit der Aufnahme verbunden und der zweite Leitungsbaum wird an einem zweiten Verbindungspunkt mit der Aufnahme verbunden. Dabei sind der erste Verbindungspunkt und der zweite Verbindungspunkt beabstandet auf einer geraden Verbindungslinie angeordnet und die Verbindungslinie verläuft durch eine Mittelachse des Bedienhebels und der erste Leitungsbaum und der zweite Leitungsbaum verlaufen wendelförmig um die Mittelachse des Bedienhebels, wobei der erste Leitungsbaum und der zweite Leitungsbaum sich in ihrem Drehsinn unterscheiden oder nicht unterscheiden.

In einem dritten Aspekt betrifft die vorgestellte Erfindung eine Maschine, insbesondere einen Bagger oder Traktor mit Frontlader, umfassend eine der Ausgestaltungen des vorgestellten Bedienelements. Die Maschine kann ein Steuerungselement, wie bspw. einen Baggerarm, der mittels des Bedienelements steuerbar ist, umfassen. Zum Steuern des Steuerungselements ist das Bedienelement mit dem Steuerungselement verbunden. Dazu weist das Bedienelement eine Schnittstelle, wie bspw. einen Stecker auf, die mit der Gegenschnittstelle, wie bspw. einer Buchse, des Steuerungselements wechselwirkt und insbesondere eine kommunikative Verbindung zum Übertragen von Steuerungsbefehlen bereitstellt.

Die Erfindung wird nachfolgend in einer bevorzugten Ausführungsform unter Bezugnahme auf die beigefügten Zeichnungen beispielhaft beschrieben, wobei weitere vorteilhafte Einzelheiten den Figuren der Zeichnungen zu entnehmen sind.

Die Figuren der Zeichnung zeigen im Einzelnen:
- Fig. 1:: eine schematische Darstellung einer möglichen Ausgestaltung des erfindungsgemäßen Bedienelements,
- Fig. 2:: eine weitere schematische Darstellung des Bedienelements aus Figur 1 in geschnittener Ansicht,
- Fig. 3:: noch eine weitere schematische Darstellung des Bedienelements aus Figur 1,
- Fig. 4:: eine schematische Darstellung einer möglichen Ausgestaltung des erfindungsgemäßen Herstellungsverfahrens,
- Fig. 5:: eine schematische Darstellung einer möglichen Ausgestaltung der erfindungsgemäßen Maschine.

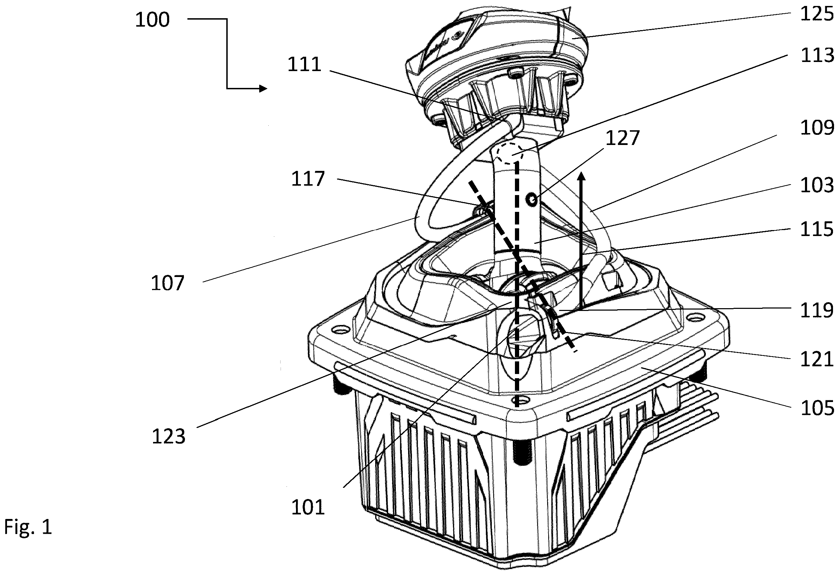

In **Fig. 1** ist ein Bedienelement 100 dargestellt. Das Bedienelement 100 umfasst einen um einen Drehpunkt 101 schwenkbar gelagerten Bedienhebel 103, eine Vielzahl hier nicht erkennbarer Steuerleitungen zum Verbinden des Bedienhebels 103 mit einer hier nicht dargestellten Steuerungseinheit und eine Aufnahme 105 zum Aufnehmen der Steuerleitungen. Jeweilige Steuerleitungen der Vielzahl Steuerleitungen verlaufen in einer paarigen Anordnung aus einem ersten Leitungsbaum 107 und einem zweiten Leitungsbaum 109 an dem Bedienhebel entlang. Entsprechend umfassen der erste Leitungsbaum 107 und der zweite Leitungsbaum 109 jeweils eine Anzahl, insbesondere eine Vielzahl, Steuerleitungen.

Durch die Aufteilung der Steuerleitungen des Bedienelements 100 auf den ersten Leitungsbaum 107 und den zweiten Leitungsbaum 109 wird ein einzelner Leitungsbaum mit einem besonders großen Durchmesser und entsprechend großem mechanischen Widerstand vermieden. Stattdessen weisen der erste Leitungsbaum 107 und der zweite Leitungsbaum 109 jeweils einen besonders kleinen Durchmesser mit einem entsprechend kleinen mechanischen Widerstand auf. Bspw. können 20 Steuerleitungen auf den ersten Leitungsbaum 107 und den zweiten Leitungsbaum 109 aufgeteilt sein, so dass der erste Leitungsbaum 107 zehn Steuerleitungen und der zweite Leitungsbaum 109 weitere zehn Steuerleitungen umfasst.

Der erste Leitungbaum 107 verläuft von einem ersten Ausgangspunkt 111 aus zu der Aufnahme 105, der zweite Leitungsbaum 109 von einem zweiten Ausgangspunkt 113 aus zu dieser. Der erste Ausgangspunkt 111 und der zweite Ausgangspunkt 113 sind beabstandet von der Aufnahme 105 angeordnet, wie durch Pfeil 115 angedeutet. Der erste Leitungsbaum 107 ist an einem ersten Verbindungspunkt 117 mit der Aufnahme 105 verbunden. Der zweite Leitungsbaum 109 ist an einem zweiten Verbindungspunkt 119 mit der Aufnahme 105 verbunden. Der erste Verbindungspunkt 117 und der zweite Verbindungspunkt 119 liegen voneinander beabstandet auf einer geraden Verbindungslinie 121 die durch eine Mittelachse 123 des Bedienhebels 103 verläuft. Da erster Verbindungspunkt 117 und zweiter Verbindungspunkt 119 voneinander durch die Mittelachse beabstandet einander gegenüberliegen, kompensieren sich die durch die beiden Leitungsbäume 107, 109 auf den Bedienhebel 103 wirkenden Drehmomente bzw. Kräfte, so dass eine Abweichung bzw. ein sogenanntes "Offset" des Bedienhebels 103 von einer durch einen Nutzer erwarteten Bewegungslinie minimal ist. Bei der dargestellten Ausführungsform verlaufen die beiden Leitungsbäume 107, 109 in gleichem Drehsinn.

Auf dem Bedienhebel 103 ist eine Benutzerschnittstelle 125 angeordnet, die Benutzerschnittstelle 125 umfasst eine Vielzahl Schalter und Taster zum Übermitteln von Steuerungsbefehlen über die Steuerleitungen an die Steuerungseinheit und ggf. auch einen ergonomisch geformten Griffabschnitt.

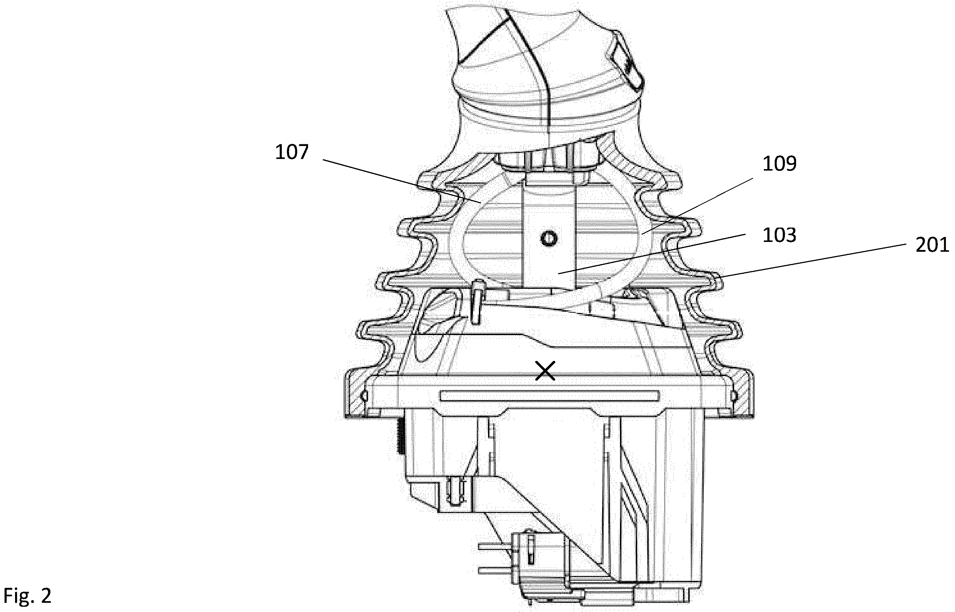

In **Fig. 2** ist in geschnittener Seitenansicht der Ausführungsform gut erkennbar, dass der erste Leitungsbaum 107 und der zweite Leitungsbaum 109 jeweils wendelförmig verlaufen, wobei der erste Leitungsbaum 107 in einem Drehsinn verläuft, der sich von einem Drehsinn, mit dem der zweite Leitungsbaum 109 verläuft, nicht unterscheidet. Entsprechend dreht eine Schraubenlinie, gemäß derer der erste Leitungsbaum 107 verläuft im gleichen Sinn wie eine Schraubenlinie, gemäß derer der zweite Leitungsbaum 109 verläuft. Durch die wendelförmigen Verläufe des ersten Leitungsbaums 107 und des zweiten Leitungsbaums 109 wird eine besonders weite Bewegung des Bedienhebels 103, insbesondere eine Auslenkung um 25° in X-Richtung und/oder Y-Richtung ermöglicht. Dabei nehmen die Leitungsbäume 107 und 109 einen geringen Bauraum ein, so dass ein Faltenbalg 201, der die Leitungsbäume 107 und 109 umgibt, sehr kompakt ausgestaltet werden kann und entsprechend selbst einer Bewegung des Bedienhebels 103 nur einen geringen mechanischen Widerstand entgegenstellt. Den oberen Abschluss der Fig. 2 bildet die Benutzerschnittstelle, den unteren die Aufnahme, jeweils wie in Fig. 1 dargestellt. Die Aufnahme ist gleichzeitig als Gehäuse für das Bedienelement ausgebildet, mit dem dieses beispielsweise an einem Fahrzeug oder einem Armrest befestigt ist. Mit einem "**x**" ist die Lage des Drehpunktes 101 aus Fig. 1 angedeutet, der sich im hier nicht sichtbaren Inneren des Gehäuses befindet.

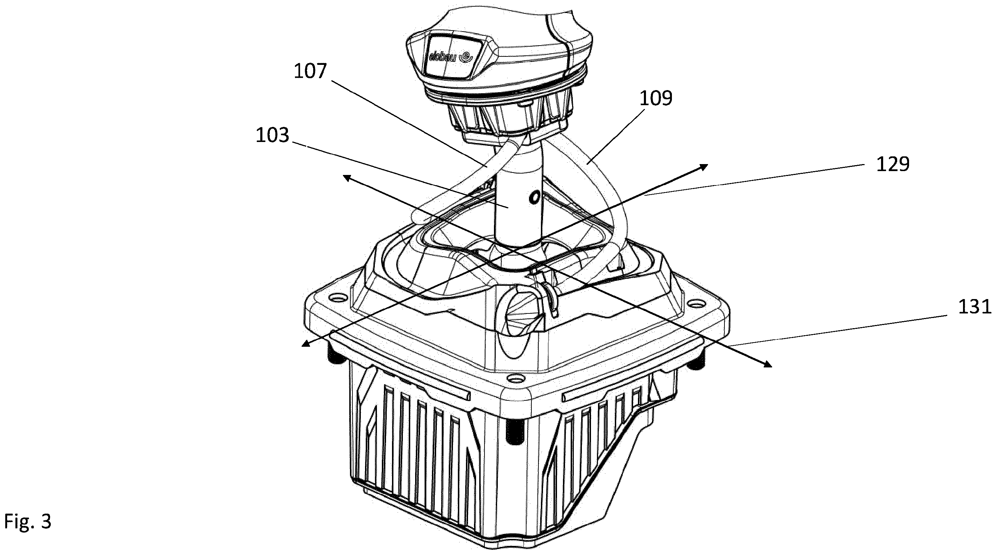

In **Fig. 3** sind schematisch eine X-Achse 129 und eine Y-Achse 131 eines Bewegungsfeldes des Bedienhebels 103 dargestellt. Aufgrund der wendelförmigen Leitungsbäume 107 und 109 kann der Bedienhebel 103 bis zu einer Auslenkung von 25° mit einer gleichbleibenden bzw. minimalen Ablenkung bewegt werden.

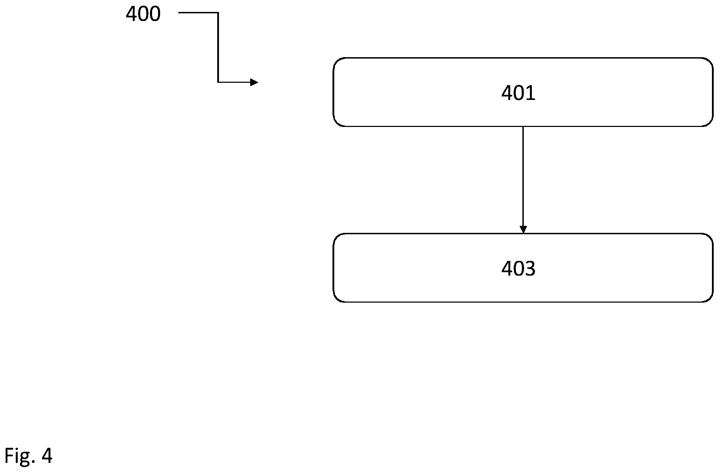

In **Fig. 4** ist ein Herstellungsverfahren 400 dargestellt. Das Herstellungsverfahren 400 umfasst einen Bereitstellungsschritt 401, bei dem ein um einen Drehpunkt schwenkbar gelagerter Bedienhebel, eine Vielzahl Steuerleitungen zum Verbinden des Bedienhebels mit einer Steuerungseinheit und eine Aufnahme zum Aufnehmen der Steuerleitungen bereitgestellt werden. Weiterhin umfasst das Herstellungsverfahren 400 einen Verbindungsschritt 403, bei dem jeweilige Steuerleitungen der Vielzahl Steuerleitungen in mindestens einer paarigen Anordnung aus einem ersten Leitungsbaum und einem zweiten Leitungsbaum in Richtung der Aufnahme verlegt werden, wobei der erste Leitungsbaum von einem ersten Ausgangspunkt aus in Richtung der Aufnahme verlegt wird und der zweite Leitungsbaum von einem zweiten Ausgangspunkt aus in Richtung der Aufnahme verlegt wird. Der erste Leitungsbaum wird an einen einem ersten Verbindungspunkt mit der Aufnahme verbunden und der zweite Leitungsbaum wird an einem zweiten Verbindungspunkt mit der Aufnahme verbunden. Dabei sind der erste Verbindungspunkt und der zweite Verbindungspunkt beabstandet auf einer geraden Verbindungslinie angeordnet und die Verbindungslinie verläuft durch eine Mittelachse des Bedienhebels.

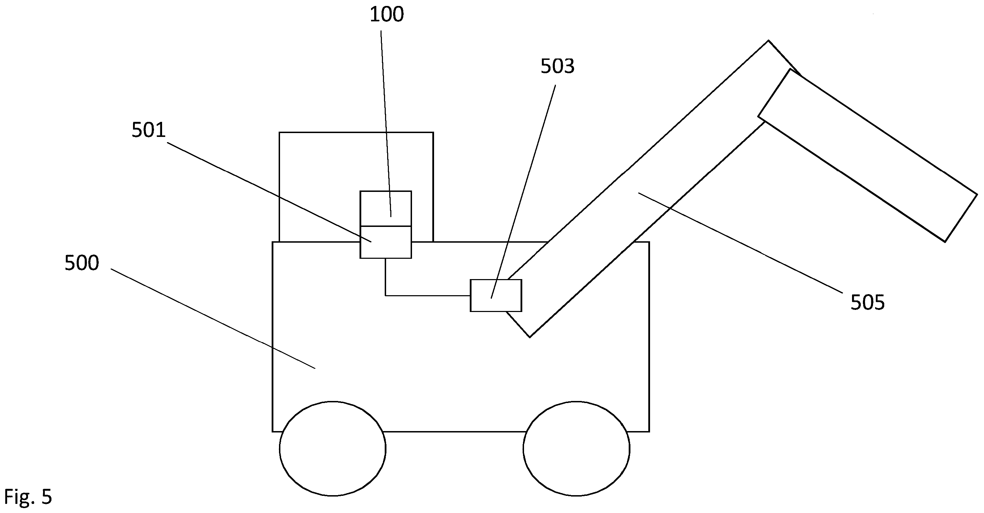

In **Fig. 5** ist eine Maschine 500 dargestellt. Die Maschine 500 ist ein Bagger oder wie dargestellt ein Traktor und umfasst das Bedienelement 100 gemäß Fig. 1. Das Bedienelement 100 ist vorliegend mittels einer Schnittstelle 501 mit einer Gegenschnittstelle 503 der Maschine 500 kommunikativ verbunden, so dass mittels des Bedienelements 100 bereitgestellte Steuerungsbefehle über die Schnittstelle 501 an die Gegenschnittstelle 503 und schließlich eine Steuerungseinheit, wie bspw. einen Baggerarm 505 der Maschine 500 übertragen werden.

### Bezugszeichenliste

- 100: Bedienelement
- 101: Drehpunkt
- 103: Bedienhebel
- 105: Aufnahme
- 107: erster Leitungsbaum
- 109: zweiter Leitungsbaum
- 111: erster Ausgangspunkt
- 113: zweiter Ausgangspunkt
- 115: Pfeil
- 117: erster Verbindungspunkt
- 119: zweiter Verbindungspunkt
- 121: Verbindungslinie
- 123: Mittelachse
- 125: Benutzerschnittstelle
- 127: Stellelement
- 129: X-Achse
- 131: Y-Achse
- 201: Faltenbalg
- 400: Herstellungsverfahren
- 401: Bereitstellungsschritt
- 403: Verbindungsschritt
- 500: Maschine
- 501: Schnittstelle
- 503: Gegenschnittstelle
- 505: Steuerungseinheit

## Patentansprüche

1. Bedienelement (100) zum Bedienen einer Maschine (500) durch einen Bediener, wobei das Bedienelement (100) umfasst:
- einen um einen Drehpunkt (101) schwenkbar gelagerten Bedienhebel (103),
- eine Vielzahl Steuerleitungen zum Verbinden des Bedienhebels (103) mit einer Steuerungseinheit,
- eine Aufnahme (105) zum Aufnehmen der Steuerleitungen,
wobei jeweilige Steuerleitungen der Vielzahl Steuerleitungen in mindestens einer paarigen Anordnung aus einem ersten Leitungsbaum (107) und einem zweiten Leitungsbaum (109) an dem Bedienhebel (103) entlang zu der Aufnahme (105) verlaufen,
wobei der erste Leitungsbaum (107) von einem ersten Ausgangspunkt (111) aus zu der Aufnahme (105) verläuft und der zweite Leitungsbaum (109) von einem zweiten Ausgangspunkt (113) aus zu der Aufnahme (105) verläuft,
wobei der erste Ausgangspunkt (111) und der zweite Ausgangspunkt (113) beabstandet von der Aufnahme (105) angeordnet sind,
wobei der erste Leitungsbaum (107) an einem ersten Verbindungspunkt (117) mit der Aufnahme (105) verbunden ist, wobei der zweite Leitungsbaum (109) an einem zweiten Verbindungspunkt (119) mit der Aufnahme (105) verbunden ist,
wobei der erste Verbindungspunkt (117) und der zweite Verbindungspunkt (119) voneinander beabstandet auf einer geraden Verbindungslinie (121) angeordnet sind,
wobei die Verbindungslinie (121) durch eine Mittelachse (123) des Bedienhebels (103) verläuft, **dadurch gekennzeichnet, dass** der erste Leitungsbaum (107) und der zweite Leitungsbaum (109) wendelförmig um die Mittelachse (123) des Bedienhebels (103) verlaufen, wobei der erste Leitungsbaum (107) und der zweite Leitungsbaum (109) sich in ihrem Drehsinn unterscheiden oder nicht unterscheiden.

2. Bedienelement (100) nach Anspruch 1, **dadurch gekennzeichnet, dass** die Mittelachse (123) zwischen einem oberen Ende und einem unteren Ende des Bedienhebels (103) und durch den Drehpunkt (101) verläuft.

3. Bedienelement (100) nach Anspruch einem der voranstehenden Ansprüche, **dadurch gekennzeichnet, dass** die Verbindungslinie (121) durch den Drehpunkt (101) verläuft.

4. Bedienelement (100) nach einem der voranstehenden Ansprüche, **dadurch gekennzeichnet, dass** die Steuerleitungen elektrische Leitungen, auch in Form von Flachbändern, pneumatische Leitungen und/oder hydraulische Leitungen umfassen.

5. Bedienelement (100) nach einem der voranstehenden Ansprüche, **dadurch gekennzeichnet, dass** der erste Ausgangspunkt (111) und der zweite Ausgangspunkt (113) beabstandet auf einer den ersten Ausgangspunkt (111) und den zweiten Ausgangspunkt (113) verbindenden Ausgangspunktlinie angeordnet sind, wobei die Ausgangspunktlinie durch die Mittelachse (123) des Bedienhebels (103) verläuft.

6. Bedienelement (100) nach einem der voranstehenden Ansprüche, **dadurch gekennzeichnet, dass** ein durch den ersten Leitungsbaum (107) auf den Bedienhebel (103) wirkendes Drehmoment einem durch den zweiten Leitungsbaum (109) auf den Bedienhebel (103) wirkenden Drehmoment entspricht, so dass sich jeweilige durch die Steuerleitungen auf den Bedienhebel (103) wirkende Drehmomente kompensieren.

7. Bedienelement (100) nach einem der voranstehenden Ansprüche, **dadurch gekennzeichnet, dass** der erste Leitungsbaum (107) eine Vielzahl von elektrischen Steuerleitungen umfasst, die vorzugsweise zusammen mit einer einzigen gemeinsamen Hülle ummantelt sind, und der zweite Leitungsbaum (109) eine Vielzahl von elektrischen Steuerleitungen umfasst, die zusammen vorzugsweise mit einer einzigen gemeinsamen Hülle ummantelt sind.

8. Bedienelement (100) nach einem der voranstehenden Ansprüche, **dadurch gekennzeichnet, dass** der erste Leitungsbaum (107) länger ist als eine erste Gerade zwischen dem ersten Ausgangspunkt (111) und dem ersten Verbindungspunkt (117), und der zweite Leitungsbaum (109) länger ist als eine zweite Gerade zwischen dem zweiten Ausgangspunkt (113) und dem zweiten Verbindungspunkt (119).

9. Herstellungsverfahren (400) zur Herstellung eines Bedienelements (100), wobei das Herstellungsverfahren (400) umfasst:
- einen Bereitstellungsschritt (401), bei dem ein um einen Drehpunkt (101) schwenkbar gelagerter Bedienhebel (103), eine Vielzahl Steuerleitungen zum Verbinden des Bedienhebels (103) mit einer Steuerungseinheit (501) und eine Aufnahme (105) zum Aufnehmen der Steuerleitungen bereitgestellt werden,
- einen Verbindungsschritt (403), bei dem jeweilige Steuerleitungen der Vielzahl Steuerleitungen in mindestens einer paarigen Anordnung aus einem ersten Leitungsbaum (107) und einem zweiten Leitungsbaum (109) in Richtung der Aufnahme (105) verlegt werden,
wobei der erste Leitungsbaum (107) von einem ersten Ausgangspunkt (111) aus in Richtung der Aufnahme (105) verlegt wird und der zweite Leitungsbaum (109) von einem zweiten Ausgangspunkt (113) aus in Richtung der Aufnahme (105) verlegt wird, und der erste Leitungsbaum (107) an einen einem ersten Verbindungspunkt (117) mit der Aufnahme (105) verbunden wird, und der zweite Leitungsbaum (109) an einem zweiten Verbindungspunkt (119) mit der Aufnahme (105) verbunden wird,
wobei der erste Verbindungspunkt (117) und der zweite Verbindungspunkt (119) beabstandet auf einer geraden Verbindungslinie (121) angeordnet sind, wobei die Verbindungslinie (121) durch eine Mittelachse (123) des Bedienhebels (103) verläuft und wobei der erste Leitungsbaum (107) und der zweite Leitungsbaum (109) wendelförmig um die Mittelachse (123) des Bedienhebels (103) verlaufen, wobei der erste Leitungsbaum (107) und der zweite Leitungsbaum (109) sich in ihrem Drehsinn unterscheiden oder nicht unterscheiden.

10. Maschine (500), insbesondere Bagger, umfassend ein Bedienelement (100) nach einem der Ansprüche 1 bis 8.

## Claims

1. An operating element (100) for operating a machine (500) by an operator, wherein the operating element (100) comprises:
- a control lever (103) pivotably mounted around a pivot point (101),
- a plurality of control lines for connecting the control lever (103) to a control unit,
- a receptacle (105) for picking up the control lines,
wherein respective control lines of the plurality of control lines run in at least one paired arrangement consisting of a first wiring harness (107) and a second wiring harness (109) along the control lever (103) to the receptacle (105),
wherein the first wiring harness (107) runs from a first starting point (111) to the receptacle (105) and the second wiring harness (109) runs from a second starting point (113) to the receptacle (105),
wherein the first starting point (111) and the second starting point (113) are arranged at a distance from the receptacle (105),
wherein the first wiring harness (107) is connected to the receptacle (105) at a first connection point (117),
wherein the second wiring harness (109) is connected to the receptacle (105) at a second connection point (119),
wherein the first connection point (117) and the second connection point (119) are arranged at a distance from one another on a straight connecting line (121),
wherein the connecting line (121) runs through a central axis (123) of the control lever (103), **characterized in that** the first wiring harness (107) and the second wiring harness (109) run spirally around the central axis (123) of the control lever (103), wherein the first wiring harness (107) and the second wiring harness (109) differ or do not differ in their sense of rotation.

2. The operating element (100) according to claim 1, **characterized in that** the central axis (123) runs between an upper end and a lower end of the control lever (103) and through the pivot point (101).

3. The operating element (100) according to claim either of the preceding claims, **characterized in that** the connecting line (121) runs through the pivot point (101).

4. The operating element (100) according to any of the preceding claims, **characterized in that** the control lines comprise electrical cables, also in the form of ribbon cables, pneumatic lines and/or hydraulic lines.

5. The operating element (100) according to any of the preceding claims,
**characterized in that** the first starting point (111) and the second starting point (113) are arranged at a distance on a starting point line connecting the first starting point (111) and the second starting point (113), wherein the starting point line runs through the central axis (123) of the control lever (103).

6. The operating element (100) according to any of the preceding claims, **characterized in that** a torque acting via the first wiring harness (107) on the control lever (103) corresponds to a torque acting via the second wiring harness (109) on the control lever (103) so that respective torques acting via the control lines on the control lever (103) compensate each other.

7. The operating element (100) according to any of the preceding claims,
**characterized in that** the first wiring harness (107) comprises a plurality of electrical control lines which are preferably encased together with a single common sheathing, and the second wiring harness (109) comprises a plurality of electrical control lines which are preferably encased together with a single common sheathing.

8. The operating element (100) according to any of the preceding claims, **characterized in that** the first wiring harness (107) is longer than a first straight line between the first starting point (111) and the first connection point (117), and the second wiring harness (109) is longer than a second straight line between the second starting point (113) and the second connection point (119).

9. A manufacturing method (400) for the manufacture of an operating element (100), wherein the manufacturing method (400) comprises:
- a provisioning step (401) in which a control lever (103) pivotably mounted around a pivot point (101), a plurality of control lines for connecting the control lever (103) to a control unit (501), and a receptacle (105) for picking up the control lines are provided,
- a connection step (403) in which respective control lines of the plurality of control lines are laid in at least one paired arrangement consisting of a first wiring harness (107) and a second wiring harness (109) in the direction of the receptacle (105),
wherein the first wiring harness (107) is laid from a first starting point (111) in the direction of the receptacle (105) and the second wiring harness (109) is laid from a second starting point (113) in the direction of the receptacle (105), and the first wiring harness (107) is connected to the receptacle (105) at a first connection point (117), and the second wiring harness (109) is connected to the receptacle (105) at a second connection point (119),
wherein the first connection point (117) and the second connection point (119) are arranged at a distance on a straight connecting line (121), wherein the connecting line (121) runs through a central axis (123) of the control lever (103), and wherein the first wiring harness (107) and the second wiring harness (109) run spirally around the central axis (123) of the control lever (103), wherein the first wiring harness (107) and the second wiring harness (109) differ or do not differ in their sense of rotation.

10. A machine (500), in particular an excavator, comprising an operating element (100) according to any of claims 1 to 8.

## Revendications

1. Élément de manipulation (100) pour la manipulation d'une machine (500) par un opérateur, dans lequel l'élément de manipulation (100) comprend :
- un levier de manipulation (103) monté de manière à pouvoir pivoter autour d'un point de rotation (101),
- une pluralité de lignes de commande permettant de relier le levier de manipulation (103) à une unité de commande,
- un réceptacle (105) permettant de recevoir les lignes de commande,
dans lequel des lignes de commande respectives de la pluralité de lignes de commande s'étendent le long du levier de manipulation (103) jusqu'au réceptacle (105) dans au moins un agencement par paires d'un premier faisceau de lignes (107) et d'un second faisceau de lignes (109),
dans lequel le premier faisceau de lignes (107) s'étend depuis un premier point de départ (111) jusqu'au réceptacle (105) et le second faisceau de lignes (109) s'étend depuis un second point de départ (113) jusqu'au réceptacle (105),
dans lequel le premier point de départ (111) et le second point de départ (113) sont disposés de manière à être espacés du réceptacle (105),
dans lequel le premier faisceau de lignes (107) est relié au réceptacle (105) au niveau d'un premier point de liaison (117),
dans lequel le second faisceau de lignes (109) est relié au réceptacle (105) au niveau d'un second point de liaison (119),
dans lequel le premier point de liaison (117) et le second point de liaison (119) sont espacés l'un de l'autre sur une ligne de liaison (121) droite,
dans lequel la ligne de liaison (121) passe par un axe central (123) du levier de manipulation (103), **caractérisé en ce que** le premier faisceau de lignes (107) et le second faisceau de lignes (109) s'étendent sous la forme d'une hélice autour de l'axe central (123) du levier de manipulation (103), dans lequel le premier faisceau de lignes (107) et le second faisceau de lignes (109) diffèrent ou non en ce qui concerne leur sens de rotation.

2. Élément de manipulation (100) selon la revendication 1,
**caractérisé en ce que** l'axe central (123) s'étend entre une extrémité supérieure et une extrémité inférieure du levier de manipulation (103) et passe par le point de rotation (101).

3. Élément de manipulation (100) selon la revendication l'une des revendications précédentes, **caractérisé en ce que** la ligne de liaison (121) passe par le point de rotation (101).

4. Élément de manipulation (100) selon l'une des revendications précédentes, **caractérisé en ce que** les lignes de commande comprennent des lignes électriques, également sous forme de bandes plates, des lignes pneumatiques et/ou des lignes hydrauliques.

5. Élément de manipulation (100) selon l'une des revendications précédentes, **caractérisé en ce que** le premier point de départ (111) et le second point de départ (113) sont disposés de manière à être espacés sur une ligne de points de départ reliant le premier point de départ (111) et le second point de départ (113), dans lequel la ligne de points de départ passe par l'axe central (123) du levier de manipulation (103).

6. Élément de manipulation (100) selon l'une des revendications précédentes, **caractérisé en ce qu'**un couple agissant sur le levier de manipulation (103) par le premier faisceau de lignes (107) correspond à un couple agissant sur le levier de manipulation (103) par le second faisceau de lignes (109), de sorte que des couples respectifs agissant sur le levier de manipulation (103) par les lignes de commande se compensent.

7. Élément de manipulation (100) selon l'une des revendications précédentes, **caractérisé en ce que** le premier faisceau de lignes (107) comprend une pluralité de lignes de commande électriques qui sont de préférence gainées ensemble avec une seule gaine commune, et le second faisceau de lignes (109) comprend une pluralité de lignes de commande électriques qui sont de préférence gainées ensemble avec une seule gaine commune.

8. Élément de manipulation (100) selon l'une des revendications précédentes, **caractérisé en ce que** le premier faisceau de lignes (107) est plus long qu'une première droite entre le premier point de départ (111) et le premier point de liaison (117), et le second faisceau de lignes (109) est plus long qu'une seconde droite entre le second point de départ (113) et le second point de liaison (119).

9. Procédé de fabrication (400) permettant de fabriquer un élément de manipulation (100), dans lequel le procédé de fabrication (400) comprend :
- une étape de fourniture (401) lors de laquelle sont fournis un levier de manipulation (103) monté de manière à pouvoir pivoter autour d'un point de rotation (101), une pluralité de lignes de commande permettant de relier le levier de manipulation (103) à une unité de commande (501), et un réceptacle (105) permettant de recevoir les lignes de commande,
- une étape de liaison (403) lors de laquelle des lignes de commande respectives de la pluralité de lignes de commande sont posées dans au moins un agencement par paires constitué d'un premier faisceau de lignes (107) et d'un second faisceau de lignes (109) en direction du réceptacle (105),
dans lequel le premier faisceau de lignes (107) est posé à partir d'un premier point de départ (111) en direction du réceptacle (105) et le second faisceau de lignes (109) est posé à partir d'un second point de départ (113) en direction du réceptacle (105), et le premier faisceau de lignes (107) est relié au réceptacle (105) au niveau d'un premier point de liaison (117), et le second faisceau de lignes (109) est relié au réceptacle (105) au niveau d'un second point de liaison (119),
dans lequel le premier point de liaison (117) et le second point de liaison (119) sont disposés de manière à être espacés sur une ligne de liaison (121) droite, dans lequel la ligne de liaison (121) passe par un axe central (123) du levier de manipulation (103) et dans lequel le premier faisceau de lignes (107) et le second faisceau de lignes (109) s'étendent sous la forme d'une hélice autour de l'axe central (123) du levier de manipulation (103), dans lequel le premier faisceau de lignes (107) et le second faisceau de lignes (109) diffèrent ou non en ce qui concerne leur sens de rotation.

10. Machine (500), en particulier excavateur, comprenant un élément de manipulation (100) selon l'une des revendications 1 à 8.
